# EUROPÄISCHE PATENTSCHRIFT

(11) **EP 1 164 035 B1**
(45) Veröffentlichungstag und Bekanntmachung des Hinweises auf die Patenterteilung: **04.08.2004**
(21) Anmeldenummer: 01106374.0
(22) Anmeldetag: 19.03.2001
(51) Int. Cl.: B60H 1/00, B60H 1/32

(54) **Klimaanlage mit Klimatisierungs-und Wärmepumpenmodus**
Air conditioner with refrigerating and heat pump modes
Conditionneur d'air avec cycle de réfrigération et de pompe à chaleur

(30) Priorität: 17.06.2000 DE 10029934
(43) Veröffentlichungstag der Anmeldung: 19.12.2001
(73) Patentinhaber: Behr GmbH & Co., 70469 Stuttgart (DE)
(72) Erfinder: Burk, Roland, Dipl.-Phys., 70469 Stuttgart (DE); Walter, Christoph, Dipl.-Ing., 70376 Stuttgart (DE); Weinbrenner, Marcus, Dipl.-Ing., 70499 Stuttgart (DE); Krauss, Hans-Joachim, Dipl.-Ing., 70567 Stuttgart (DE)

(56) Entgegenhaltungen:
- DE-A- 4 206 611
- DE-A- 19 629 114
- DE-A- 19 806 654

## Beschreibung

Die Erfindung bezieht sich auf eine Klimaanlage, die wenigstens für einen Klimatisierungsmodus zur Kühlung eines Temperiermediums und einen Wärmepumpenmodus zur Erwärmung des Temperiermediums ausgelegt ist und dazu einen Kältemittelkreislauf mit einem Kompressor und einem Verdampfer, einen Kühlmittelkreislauf mit einer zu kühlenden wärmeerzeugenden Einheit und einem Heizkörper zur Erwärmung des Temperiermediums sowie einen Kältemittel/Kühlmittel-Wärmeübertrager umfasst, der kältemittelseitig je nach eingesetztem Kältemittel als Kondensator bzw. Gaskühler fungiert.

Derartige Klimaanlagen sind beispielsweise für Kraftfahrzeuge in Gebrauch, wobei es sich dann bei der zu kühlenden wärmeerzeugenden Einheit üblicherweise um einen Verbrennungsmotor des Kraftfahrzeugantriebs handelt. Eine Klimaanlage dieser Art für ein Kraftfahrzeug ist in der Offenlegungsschrift DE 43 41 756 A1 offenbart. Die dortige Anlage beinhaltet neben dem vom Kältemittel/Kühlmittel-Wärmeübertrager gebildeten Kondensator einen weiteren, zu diesem parallel angeordneten Kondensator, der als Kältemittel/Umgebungsluft-Wärmeübertrager ausgeführt ist, d.h. als Kältemittelkühler, in welchem das Kältemittel nicht vom Kühlmittel und nicht vom Temperiermedium, sondern von Umgebungsluft gekühlt wird. Im Kühlmittelkreislauf ist zudem ein Kühlmittelkühler vorgesehen, mit dem das Kühlmittel durch Umgebungsluft gekühlt werden kann. Durch diverse Ventile und Bypassleitungen kann das Kältemittel wahlweise über den einen oder den anderen Kondensator geleitet werden, und das Kühlmittel kann wahlweise über den Heizkörper oder an diesem vorbei, über den Kühlmittelkühler oder an diesem vorbei und über den zugehörigen Kondensator, an diesem vorbei oder über diesen zirkulierend geleitet werden, letzteres zu dem Zweck, in einer anfänglichen Betriebsphase des Kältemittelkreislaufs dessen Beitrag zur Kühlmittelerwärmung dadurch zu erhöhen, dass der betreffende Kondensator zunächst nur mit wenig Kühlmittel durchströmt wird, so dass die Kühlmitteltemperatur im Kondensator und damit auch die Kondensationstemperatur schnell ansteigt. Zu klimatisierende, einem Fahrzeuginnenraum zuzuführende Luft kann am Verdampfer gekühlt und am Heizkörper erwärmt werden.

Dokument DE 42 06 611 offenbart eine Klimaanlage, wobei der erste und der zweite Kältemittel/Kühlmittel -Wärmeübertrager in zwei getrennten Kreisläufen angeordnet sind.

Speziell bei sogenannten Niederverbrauchsfahrzeugen besteht allgemein das Problem, dass die verbrauchsoptimierten Verbrennungsmotoren, z.B. Dieselmotoren mit Direkteinspritzung, besonders im Schwachlastbetrieb, z.B. bei Stadtfahrt, nicht mehr genug Abwärme erzeugen, um den Fahrzeuginnenraum in akzeptabler Zeit auf ein komfortables Temperaturniveau zu erwärmen. Auch eine ausreichende Entfrostung der Front- und Seitenscheiben ist allein durch Motorabwärme häufig nicht mehr gewährleistet. Eine weitere, den Klimatisierungskomfort beeinträchtigende Problematik besteht in zunehmend verwendeten Start-Stop-Automatiken, bei denen der Verbrennungsmotor des Kraftfahrzeugs bei kurzen Fahrstops an Ampeln oder im Stau abgestellt wird, wodurch auch die Nebenaggregate einschließlich des Klimaanlagenkompressors deaktiviert werden.

Zur Deckung des sich aus diesen Gründen ergebenden Heizleistungsdefizits wurden bereits eine Vielzahl von Wärmepumpen-Zuheizkonzepten vorgeschlagen, meist in Form kombinierter Schaltungen von Kältemittel-, Kühlmittel- und Luftkreisläufen. Bei einem bekannten Konzept, wie es beispielsweise in der Offenlegungsschrift DE 198 06 654 A1 offenbart ist, fungiert ein Zuluft-Kältemittel-Wärmeübertrager im die Zuluft zum Fahrzeuginnenraum kühlenden Klimatisierungsmodus als Verdampfer und im die Zuluft erwärmenden Wärmepumpenmodus als Kondensator bzw. Gaskühler. Ein ähnliches Konzept mit wahlweiser Verwendung eines Zuluft/Kältemittel-Wärmeübertragers als Verdampfer oder Kondensator/Gaskühler ist in der Patentschrift DE 198 13 674 C1 offenbart. Diese bekannten Konzepte benötigen ein bidirektional arbeitendes Expansionsventil.

Die bekannten Klimaanlagen, bei denen ein Temperiermedium/Kältemittel-Wärmeübertrager im Klimatisierungsmodus als Verdampfer und optional im Wärmepumpenmodus als Kondensator/Gaskühler fungiert, haben bei der Fahrzeuganwendung generell mit dem Problem des Scheibenbeschlags zu kämpfen, das vorwiegend in der Übergangsjahreszeit bei feucht-kalter Witterung auftritt. Das in einem Reheat- d.h. Trocknungsmodus am als Verdampfer fungierenden Zuluft/Kältemittel-Wärmeübertrager niedergeschlagene Kondenswasser wird bei Aktivierung eines nachfolgenden Zuheizbetriebs im Wärmepumpenmodus vom Zuluftstrom aufgenommen, in besonderem Maße dann, wenn der Zuluft/Kältemittel-Wärmeübertrager in dieser Betriebsart als Kondensator/Gaskühler fungiert und das an ihm anhaftende Kondenswasser in den Zuluftstrom hinein verdampft, was in dieser Situation zu einem Beschlagen der vom Zuluftstrom angeströmten Fahrzeugscheiben führen kann.

Die bekannten Klimaanlagenkonzepte mit direkter Freisetzung der Kondensations- bzw. Heißgaswärme in einem im Klimatisierungsmodus als Verdampfer fungierenden Zuluft-Kältemittel-Wärmeübertrager während des Wärmepumpenmodus weisen zudem das Problem auf, dass sich über die zuluftseitige Austrittsfläche dieses Wärmeübertragers ein großer Temperaturgradient ausbilden kann, der zu signifikanten Temperaturunterschieden an verschiedenen Luftaustrittsdüsen führen kann, auf die der Zuluftstrom zur Einspeisung in verschiedene Fahrzeuginnenraumbereiche aufgeteilt wird.

Der Erfindung liegt als technisches Problem die Bereitstellung einer Klimaanlage der eingangs genannten Art zugrunde, die mit relativ einfachen Mitteln einen wirksamen Klimatisierungsbetrieb einerseits und Wärmepumpenbetrieb andererseits ermöglicht, insbesondere ohne die Gefahr einer Überfeuchtung des Temperiermediums bei Umschaltung vom Klimatisierungsmodus oder einem Reheatmodus auf den Wärmepumpenmodus und eines daraus bei Fahrzeuganwendungen resultierenden störenden Scheibenbeschlags und mit der Fähigkeit einer komfortablen Zuluftbeheizung bei Fahrzeuganwendungen im Wärmepumpenmodus ohne größere Temperaturunterschiede an verschiedenen Luftaustrittsdüsen.

Die Erfindung löst dieses Problem durch die Bereitstellung einer Klimaanlage mit den Merkmalen des Anspruchs 1. Bei dieser Anlage ist der Verdampfer charakteristischerweise von einem zweiten Kältemittel/Kühlmittel-Wärmeübertrager gebildet und nicht von einem Kältemittel/Temperiermedium-Wärmeübertrager. Dem Verdampfer ist kühlmittelseitig ein Kühlkörper zur Kühlung des Temperiermediums nachgeschaltet.

Eine störende Überfeuchtung des Temperiermediums beim Umschalten auf den Wärmepumpenmodus wird dadurch vermieden, dass die Wärmeübertragung auf den Zuluftstrom immer durch den Heizkörper und die Abkühlung des Zuluftstroms immer durch den Kühlkörper erfolgt. Die von herkömmlichen Systemen gewohnte Qualität der Zulufttemperierung bleibt erhalten. Mit dem Heizkörper einerseits und dem Kühlkörper andererseits kann das Temperiermedium in jeweils gewünschter Weise erwärmt bzw. gekühlt werden. Im Wärmepumpenmodus ist die Leistung des Heizkörpers nicht auf die Wärmeabgabe der zu kühlenden Einheit beschränkt, sondern kann zusätzlich durch die Wärmepumpenwirkung des Kältemittelkreislaufs unterstützt werden, indem die Vorlauftemperatur des Heizkörpers mittels des kühlmitteldurchströmten Kondensators/Gaskühlers angehoben wird.

Ein weiterer Vorteil der Temperiermediumkühlung nicht direkt am Verdampfer, sondern an einem diesem nachgeschalteten Kühlkörper besteht darin, dass das Temperiermedium ohne große Temperaturunterschiede über die Austrittsfläche des Kühlkörpers und/oder des Heizkörpers geführt werden kann, was bei Fahrzeuganwendungen signifikante Temperaturunterschiede der an verschiedenen Luftaustrittsdüsen in den Fahrzeuginnenraum ausgeblasenen Zuluft vermeidet.

Eine nach Anspruch 2 weitergebildete Klimaanlage beinhaltet einen Kältemittelkühler als weiteren Kondensator/Gaskühler, der kältemittelseitig parallel zum Kältemittel/Kühlmittel-Wärmeübertrager geschaltet ist und in welchem das Kältemittel von einem dritten Medium, z.B. einem Umgebungsluftstrom, gekühlt wird. Über entsprechende Strömungssteuermittel kann das Kältemittel wahlweise ganz über den einen, ganz über den anderen oder mit steuerbaren Anteilen über beide Kondensatoren/Gaskühler geführt werden. Dadurch kann im Klimatisierungsmodus Wärme über das Kältemittel und den vom Kältemittelkühler gebildeten Kondensator/Gaskühler nach außen abgegeben und zum anderen im Wärmepumpenmodus und Reheatmodus Wärme vom Kältemittelkreislauf über den anderen Kondensator/Gaskühler zum Kühlmittel-Heizkörper übertragen werden.

Eine nach Anspruch 3 weitergebildete Klimaanlage beinhaltet spezielle Kühlmittel-Strömungssteuermittel, mit deren Hilfe das aus dem Heizkörper austretende Kühlmittel wahlweise zum Verdampfer und/oder zur wärmeerzeugenden Einheit und das aus dem Kühlkörper austretende Kühlmittel wahlweise zur wärmeerzeugenden Einheit und/oder zum Verdampfer geführt werden kann. Dies macht es möglich, im Klimatisierungsmodus und im Reheatmodus den Kühlmittelkreislauf in zwei getrennt bleibende Teilkreisläufe mit dem Verdampfer und dem Kühlkörper einerseits sowie der wärmeerzeugenden Einheit, dem als Kondensator/Gaskühler fungierenden Kältemittel/Kühlmittel-Wärmeübertrager und dem Heizkörper andererseits aufzuteilen und diese Aufteilung im Wärmepumpenmodus aufzuheben, um im Heizkörper nicht abgegebene Restwärme des Kühlmittels über den Verdampfer wieder in den Kältemittelkreislauf rückzuführen und dadurch wiederzugewinnen.

Eine bevorzugte Ausführungsform der Erfindung ist in den Zeichnungen dargestellt und wird nachfolgend beschrieben. Hierbei zeigen:
- Fig. 1: ein Blockdiagramm einer Kraftfahrzeug-Klimaanlage im Klimatisierungsmodus,
- Fig. 2: ein Blockdiagramm der Klimaanlage von Fig. 1 im Wärmepumpenmodus und
- Fig. 3: ein Blockdiagramm der Klimaanlage von Fig. 1 im Reheatmodus.

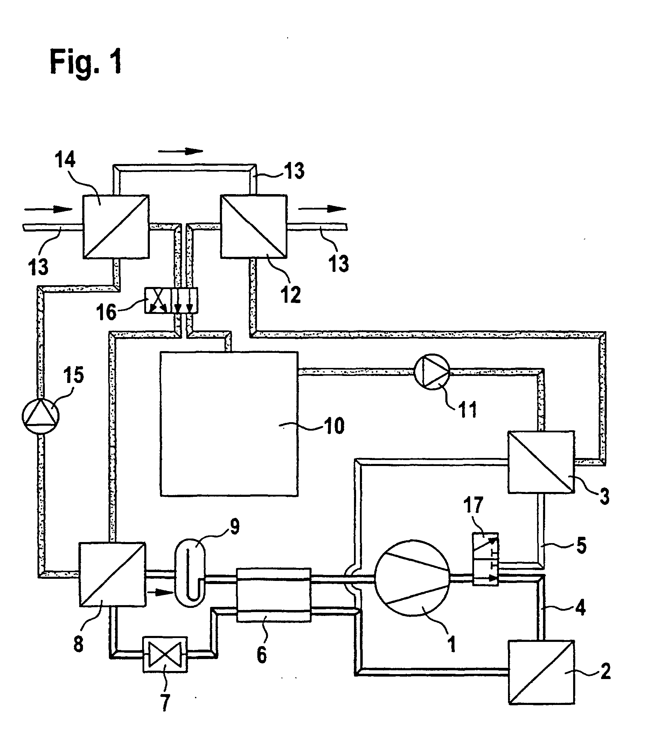

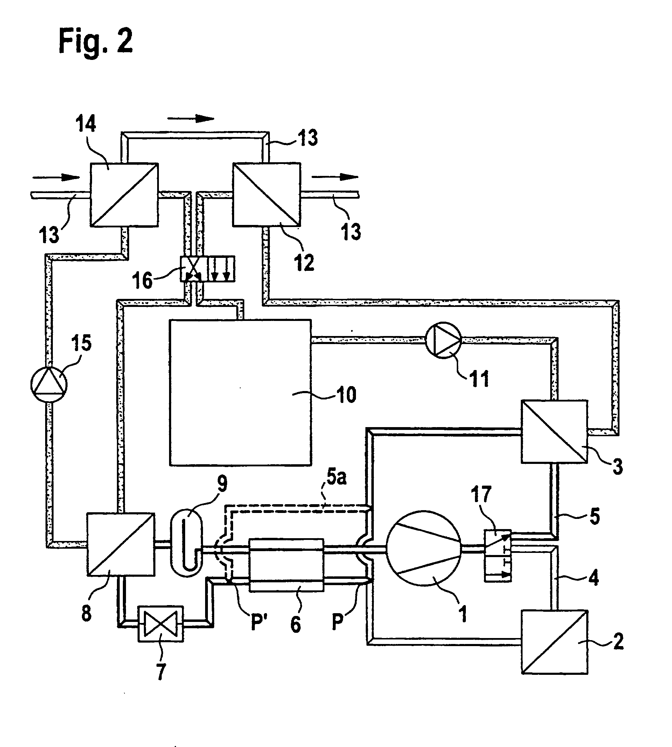

Die in den Fig. 1 bis 3 dargestellte Klimaanlage eines Kraftfahrzeuges beinhaltet einen Kältemittelkreislauf mit einem Kompressor 1, dem kältemittelhochdruckseitig zwei parallele Kondensatoren bzw. Gaskühler 2, 3 in je einem eigenen Leitungszweig 4, 5 nachgeschaltet sind, die sich vor einem Expansionsorgan 7 wieder vereinigen. An letzteres schließen sich niederdruckseitig ein Verdampfer 8 und ein Sammler 9 an, aus dem der Kompressor 1 niederdruckseitiges Kältemittel absaugt. Optional ist ein innerer Wärmeübertrager 6 vorgesehen, in welchem das aus dem Sammler 9 abgesaugte, niederdruckseitige Kältemittel mit dem hochdruckseitigen Kältemittel in Wärmekontakt gebracht werden kann. In einer ersten Realisierung vereinigen sich hierbei die beiden hochdruckseitigen Leitungszweige 4, 5 stromaufwärts des inneren Wärmeübertragers 6 in einem Punkt P. Da der innere Wärmeübertrager 6 im Wärmepumpenmodus keine Vorteile bringt, kann in einer alternativen Realisierung vorgesehen sein, die beiden hochdruckseitigen Leitungszweige 4, 5, wie in Fig. 2 angedeutet, erst stromabwärts des inneren Wärmeübertragers 6 in einem Punkt P' zusammenzuführen, indem nur der im Klimatisierungsbetrieb aktive Leitungszweig 4 durch den inneren Wärmeübertrager 6 hindurchgeführt wird, während der andere, im Wärmepumpenmodus aktive Leitungszweig 5 den inneren Wärmeübertrager 6 umgeht, wie in Fig. 2 gestrichelt mit dem Leitungsabschnitt 5a dargestellt.

Des weiteren beinhaltet die Klimaanlage einen Kühlmittelkreislauf, in welchem ein als Antriebsmotor fungierender Verbrennungsmotor 10 des Kraftfahrzeuges als abwärmeerzeugende Einheit fungiert. Von dort gelangt das verwendete Kühlmittel, z.B. Kühlwasser oder eine Kühlsole, über eine erste Kühlmittelpumpe 11 zur Kühlmittelseite des einen Kondensators/Gaskühlers 3, der als Kältemittel/Kühlmittel-Wärmeübertrager ausgelegt ist. Der Kühlmittelseite dieses Kondensators/Gaskühlers 3 ist ein Heizkörper 12 nachgeschaltet, der als Zuluft/Kühlmittel-Wärmeübertrager ausgelegt ist und dementsprechend zur Erwärmung eines Zuluftstroms 13 dient, welcher in herkömmlicher, nicht näher gezeigter Weise von außen angesaugt und in einen Fahrzeuginnenraum eingeleitet wird.

Dem Heizkörper 12 ist zuluftseitig ein Kühlkörper 14 vorgeschaltet, der ebenfalls als Zuluft/Kühlmittel-Wärmeübertrager ausgelegt ist. Dieser Kühlkörper 14 ist kühlmittelseitig mit seiner Eintrittseite an die Kühlmittelaustrittsseite des Verdampfers 8 angeschlossen, der charakteristischerweise als Kältemittel/Kühlmittel-Wärmeübertrager und nicht, wie in Fahrzeugklimaanlagen meist üblich, als Kältemittel/Zuluft-Wärmeübertrager ausgelegt ist. Dabei befindet sich in der Kühlmittelverbindungsleitung vom Verdampfer 8 zum Kühlkörper 14 eine zweite Kühlmittelpumpe 15. Der Kühlkörper 14 und der Heizkörper 12 sind in einer für solche Wärmeübertrager an sich herkömmlichen und daher hier nicht näher gezeigten Weise in einem luftführenden Klimagehäuse der Fahrzeugklimaanlage angeordnet.

Als einziges Strömungssteuermittel beinhaltet der Kühlmittelkreislauf ein 4/2-Wegeventil 16, mit dem wahlweise das aus dem Kühlkörper 14 austretende Kühlmittel dem Verdampfer 8 und das aus dem Heizkörper 12 austretende Kühlmittel dem Verbrennungsmotor 10 oder das aus dem Kühlkörper 14 austretende Kühlmittel dem Verbrennungsmotor 10 und das aus dem Heizkörper 12 austretende Kühlmittel dem Verdampfer 8 zugeführt werden kann. In ersterem Fall ist der Kühlmittelkreislauf in zwei getrennte Teilkreisläufe unterteilt, von den der eine den Verdampfer 8 und den Kühlkörper 14 und der andere den Verbrennungsmotor 10, den zugehörigen Kondensator/Gaskühler 3 und den Heizkörper 12 umfasst.

Des weiteren beinhaltet der Kältemittelkreislauf als einziges Strömungssteuermittel ein 3/2-Wegeventil 17, mit dem das aus dem Kompressor 1 austretende Kältemittel wahlweise dem einen Kondensator/Gaskühler 2 oder dem anderen Kondensator/Gaskühler 3 zugeführt werden kann.

Die wie oben beschrieben aufgebaute Klimaanlage ermöglicht sowohl einen Klimatisierungsbetrieb zur Kühlung der Zuluft 13 als auch einen Wärmepumpenbetrieb zur möglichst raschen und effektiven Zuluftaufheizung auch bei noch relativ wenig anfallender Verbrennungsmotorabwärme und einen Reheatbetrieb zur Trocknung der Zuluft 13.

Fig. 1 zeigt die Klimaanlage bei aktiviertem Klimatisierungsbetrieb. Die Kältemittelströmung ist dabei durch eine dickere Linie markiert. Demgemäss wird das vom Kompressor 1 abgegebene Kältemittel mittels entsprechender Steuerung des zugehörigen Ventils 17 dem Kältemittelkühler 2 zugeführt, während der als Kältemittel/Kühlmittel-Wärmeübertrager ausgelegte andere Kondensator/Gaskühler 3 inaktiv bleibt. Das hochdruckseitige Kältemittel wird im Kältemittelkühler 2 von Umgebungsluft kondensiert bzw. gekühlt, gibt im optionalen inneren Wärmeübertrager 6 Wärme an das niederdruckseitige Kältemittel ab und wird dann vom Expansionsorgan 7 in den Verdampfer 8 entspannt. Von dort gelangt es über den Sammler 9 und den optionalen inneren Wärmeübertrager 6 wieder zum Kompressor 1.

Der Verdampfer 8 kühlt dadurch das ihm zugeführte Kühlmittel, das dann seinerseits im anschließenden Kühlkörper 14 in der gewünschten Weise die dem Fahrzeuginnenraum zuzuführende Zuluft 13 kühlt. Vom Kühlkörper 14 strömt das Kühlmittel durch entsprechende Steuerung des Kühlmittelventils 16 wieder zum Verdampfer 8. Der in dieser Betriebsart von dem Teilkreislauf mit dem Verdampfer 8 und dem Kühlkörper 14 getrennte Teil des Kühlmittelkreislaufs bleibt bezüglich Zulufttemperierung inaktiv, indem bei sogenannten wasserseitig geregelten Klimaanlagen der Kühlmittelstrom durch ein nicht gezeigtes Ventil unterbunden wird. Bei sogenannten luftseitig geregelten Klimaanlagen kann der Heizkörper 12 von heißem Kühlmittel durchströmt bleiben, wobei dann in herkömmlicher Weise dafür gesorgt wird, dass der am Kühlkörper 14 abgekühlte Zuluftstrom 13 über einen entsprechenden Bypasskanal am Heizkörper 12 vorbeigeleitet wird. Dieser abgetrennte Teil des Kühlmittelkreislaufs entspricht somit einem konventionellen Heizkreislauf als Teilkreislauf des Kühlsystems für den Verbrennungsmotor 10.

Fig. 2 zeigt die Klimaanlage im Wärmepumpenmodus, der dazu dient, die Zuluft 13 durch Zuheizung auch dann ausreichend aufheizen zu können, wenn dies mit der Abwärme des Verbrennungsmotors allein nicht gewährleistet ist. In diesem Betriebsmodus wird das Kältemittel, wie wiederum mit dickerer Linie symbolisiert, vom Kompressor 1 durch entsprechende Einstellung des zugehörigen Ventils 17 zum kühlmittelseitigen Kondensator/Gaskühler 3 geleitet, von wo das hochdruckseitige Kältemittel bei der Variante mit dem Vereinigungspunkt P vor dem inneren Wärmeübertrager 6 zu letzterem gelangt. Bei der Variante, bei der sich der im Wärmepumpenmodus aktive hochdruckseitige Leitungszweig 5 erst hinter dem inneren Wärmeübertrager 6 im Punkt P' mit dem anderen hochdruckseitigen Leitungszweig 4 verbindet, gelangt das hochdruckseitige Kältemittel vom kühlmittelseitigen Kondensator/Gaskühler 3 direkt zum Expansionsorgan 7. Vom Expansionsorgan 7 gelangt das Kältemittel, wie im Betriebszustand von Fig. 1, zum Verdampfer 8 und von dort über den Sammler 9 und den inneren Wärmeübertrager 6 wieder zum Kompressor 1. Der in diesem Betriebszustand aktive kühlmittelseitige Kondensator/Gaskühler 3 bringt zusätzlich zu eventuell vorhandener Abwärme des Verbrennungsmotors 10 Wärme in den Kühlmittelkreislauf direkt vor dem Heizkörper 12 ein, in welchem das solchermaßen aufgeheizte Kühlmittel die Zuluft 13 in gewünschter Weise erwärmt. Um im Anfahrzustand möglichst schnell ein hohes Temperaturniveau zu erreichen, ist in der Startphase ein relativ geringer Kühlmittelmassenstrom durch den zugehörigen Kondensator/Gaskühler 3 und den Heizkörper 12 sinnvoll. Dadurch wird z.B. bei Verwendung von CO₂ als Kältemittel relativ schnell ein hohes Druckverhältnis erzeugt, so dass der Kompressor 1 sehr effektiv und rasch zusätzliche Wärmeleistung in den Kühlmittelkreislauf einbringen kann.

Das aus dem Heizkörper 12 austretende Kühlmittel wird durch entsprechende Einstellung des Kühlmittelventils 16 direkt zum Verdampfer 8 geführt, in welchem es die zuvor vom Kältemittelkreislauf eingebrachte Wärme selbigem wieder zuführt, soweit sie nicht im Heizkörper 12 zur Zuluftaufheizung genutzt wurde. Somit wird die vom Heizkörper 12 aufgrund des niedrigeren Temperaturniveaus nicht übertragbare Kühlmittelrestwärme durch die Wärmepumpenwirkung des Kältemittelkreislaufs auf die höhere Temperatur des Kühlmittelvorlaufs gepumpt. Das aus dem Verdampfer 8 austretende Kühlmittel wird über den Kühlkörper 14 und von dort durch entsprechende Einstellung des Kühlmittelventils 16 wieder zum Verbrennungsmotor 10 geführt. Sollte je nach Außenlufttemperatur eine unerwünschte Abkühlung angesaugter Zuluft 13 am Kühlkörper 14 auftreten, lässt sich dies z.B. dadurch vermeiden, dass die Zuluft 13 in diesem Betriebszustand über einen zugehörigen Bypasskanal am Kühlkörper 14 vorbeigeleitet wird.

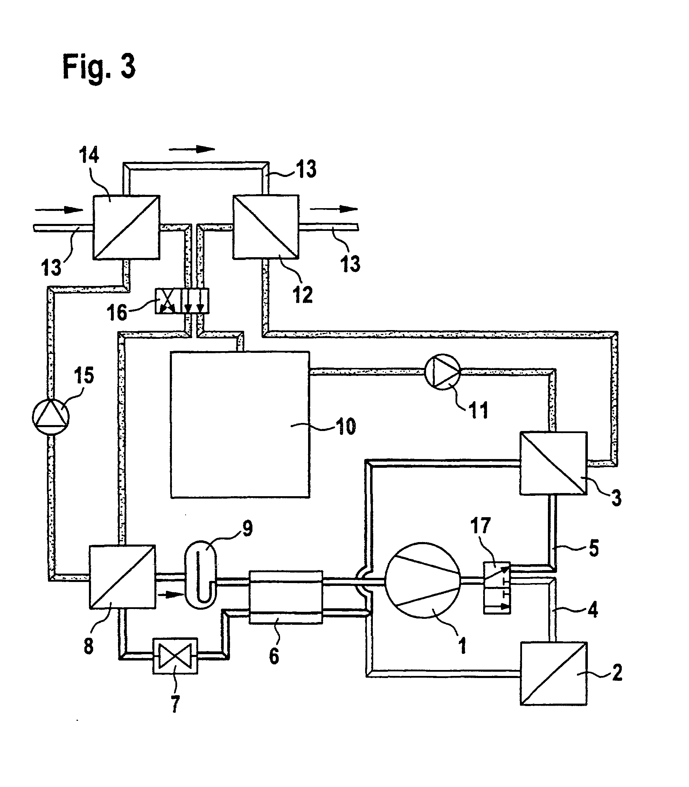

Fig. 3 zeigt die Klimaanlage im Reheatbetrieb. Dabei entspricht die Kältemittelströmungsführung derjenigen im Wärmepumpenmodus von Fig. 2, während die Kühlmittelströmungsführung derjenigen des Klimatisierungsbetriebs von Fig. 1 entspricht, wie aus den gezeigten Stellungen des Kältemittelventils 17 und des Kühlmittelventils 16 ersichtlich. Dies hat zur Folge, dass wie im Wärmepumpenmodus das vom Verbrennungsmotor 10 kommende Kühlmittel im zugehörigen Kondensator/Gaskühler 3 weiter aufgeheizt wird, bevor es in den Heizkörper 12 eintritt. Von dort wird es nun jedoch direkt zum Verbrennungsmotor 10 zurückgeführt. Von diesem Hochtemperaturkreis trennt das Kühlmittelventil 16 den Niedertemperaturkreis des Kühlmittels mit dem Verdampfer 8 und dem Kühlkörper 14, so dass die angesaugte Zuluft 13 am Kühlkörper 14 durch die Wirkung des Verdampfers 8 effektiv unter seine Taupunkttemperatur gekühlt und dadurch getrocknet werden kann. Der luftseitig nachgeschaltete Heizkörper 12 sorgt dann wieder für eine ausreichende Erwärmung der Zuluft 13.

Es versteht sich, dass die erfindungsgemäße Klimaanlage zusätzlich zu den gezeigten Komponenten je nach Anwendungsfall weitere Komponenten umfassen kann. Die beiden Kondensatoren/Gaskühler können als separate Baueinheiten realisiert oder in eine gemeinsame Baueinheit integriert sein. Es ist auch möglich, nur den kühlmittelseitig angekoppelten Kondensator/Gaskühler zu verwenden und auf den Kältemittelkühler zu verzichten, wobei dann in geeigneter Weise dafür zu sorgen ist, dass im Klimatisierungsmodus von diesem Kondensator/Gaskühler in den Kühlmittelkreislauf eingebrachte Wärme dort wieder geeignet abgeführt wird, z.B. über einen Kühlmittelkühler, ohne eine unerwünschte Zuluftaufheizung zu verursachen. Es sind alle gängigen Kältemittel und Kühlmittel verwendbar, wobei je nach Kältemittel der oder die hochdruckseitigen Wärmeübertrager als Kondensator oder Gaskühler fungieren. Insbesondere ist der Einsatz von sicherheitskritischen Kältemitteln für Fahrzeuganwendungen problemlos möglich, da alle Komponenten des Kältemittelkreislaufs außerhalb des zuluftseitigen Anlagenteils und damit außerhalb des Fahrzeuginnenraums gehalten werden können.

Als weitere Variante der gezeigten Klimaanlage kann vorgesehen sein, dass Kältemittel durch ein entsprechend modifiziertes Kältemittelventil in steuerbaren Anteilen sowohl dem einen wie auch dem anderen Kondensator/Gaskühler 2, 3 zugeführt und/oder durch ein entsprechend modifiziertes Kühlmittelventil das vom Heizkörper 12 und das vom Kühlkörper 14 kommende Kühlmittel in steuerbaren Anteilen jeweils sowohl der wärmeerzeugenden Einheit 10 als auch dem Verdampfer 8 zugeführt werden kann.

Die erfindungsgemäße Klimaanlage weist eine Reihe von Vorteilen auf. So ermöglicht sie eine höhere Zusatzleistung als Zuheizsysteme mit PTC-Heizung oder Brennstoffheizung, und da die Wärmeabfuhr vom Temperiermedium im Klimatisierungsmodus und im Reheatmodus einerseits und die Wärmezufuhr zum Temperiermedium im Wärmepumpenmodus andererseits in verschiedenen Wärmeübertragern stattfindet und der Verdampfer nicht vom Temperiermedium beaufschlagt wird, lässt sich eine Überfeuchtung des Temperiermediums zuverlässig vermeiden. Bei Fahrzeuganwendungen hat dies zur Folge, dass die zu temperierende Zuluft auch unter ungünstigen Bedingungen kein Beschlagen von Fahrzeugscheiben verursacht. Des weiteren lassen sich die bei herkömmlichen Systemen, bei denen das Temperiermedium an einem wahlweise als Verdampfer und Kondensator/Gaskühler fungierenden Wärmeübertrager temperiert wird, auftretenden Temperaturgradienten des Temperiermediumstroms vermeiden.

Zur Realisierung der Klimaanlage ist ausgehend von einfachen herkömmlichen Anlagen nur ein relativ geringer zusätzlicher apparativer Aufwand in Form eines kältemittelseitigen und eines kühlmittelseitigen Mehrwegeventils sowie eines zweiten Kältemittel/Kühlmittel-Wärmeübertragers erforderlich, wobei das kühlmittelseitige Ventil nur gering belastet und daher kostengünstig realisierbar ist. Ein Netto-Wärmeentzug aus dem Kühlmittelkreislauf, der zu einer Verlängerung der Motorwarmlaufphase führen würde, wird vermieden, indem die entzogene Wärme zunehmend durch die Kompressorantriebsleistung dem Kühlmittel auf höherem Temperaturniveau wieder zugeführt wird, was sich auch positiv auf das Warmlaufverhalten des Motors auswirkt.

Die erfindungsgemäße Klimaanlage bildet des weiteren eine ideale Grundlage zur Optimierung und Weiterentwicklung integraler Thermomanagementsysteme für Niederverbrauchsfahrzeuge, wie hinsichtlich Kurzzeit-Kältespeicherung zur Überbrückung von temporären Motorstopphasen und Nutzung von Bremsenergie über einen extern ansteuerbaren Kompressor. Des weiteren kann eine Temperierung von Umschließungsflächen durch Wärmetransport über das Kühlmittel unter Verwendung dezentraler Klimatisierungskomponenten oder Flächenwärmeübertrager realisiert werden.

## Patentansprüche

1. Klimaanlage, insbesondere für ein Kraftfahrzeug, die wenigstens für einen Klimatisierungsmodus zur Kühlung eines Temperiermediums (13) und einen Wärmepumpenmodus zur Erwärmung des Temperiermediums ausgelegt ist, mit
- einem Kühlmittelkreislauf mit einer zu kühlenden wärmeerzeugenden Einheit (10) und einem Heizkörper (12) zur Erwärmung des Temperiermediums,
- einem Kältemittelkreislauf mit
- einem Kompressor (1),
- einem kältemittelseitig als Kondensator/Gaskühler fungierenden, ersten Kältemittel/Kühlmittel-Wärmeübertrager (3), wobei dem Kondensator/Gaskühler kühlmittelseitig ein Heizkörper (12) zur Erwärmung des Temperiermediums (13) nachgeschaltet ist, und
- einem kältemittelseitig als Verdampfer (8) fungierenden zweiten Kältemittel/Kühlmittel-Wärmeübertrager (8), wobei dem Verdampfer kühlmittelseitig ein Kühlkörper (14) zur Kühlung des Temperiermediums (13) nachgeschaltet ist,
**dadurch gekennzeichnet, dass**
- der erste Kältemittel/Kühlmittel-Wärmeübertrager (3) und der zweite Kältemittel/Kühlmittel-Wärmeübertrager (8) im Wärmpumpenmodus kühlmittelseitig in einem gemeinsamen Kühlmittelkreislauf angeordnet sind, und
- der erste Kältemittel/Kühlmittel-Wärmeübertrager (3) und der zweite Kältemittel/Kühlmittel-Wärmeübertrager (8) im Klimatisierungsmodus oder in einem Reheat-Modus kühlmittelseitig in zwei getrennten Kühlmittelkreisläufen angeordnet sind.

2. Klimaanlage nach Anspruch 1, **gekennzeichnet durch**
- einen als Kältemittelkühler (2) ausgelegten weiteren Kondensator/Gaskühler und
- Kältemittel-Strömungssteuermittel (17) zur steuerbaren Kältemittelzufuhr zum einen und/oder parallel zum anderen Kondensator/Gaskühler.

3. Klimaanlage nach Anspruch 1 oder 2, **gekennzeichnet durch** Kühlmittel-Strömungssteuermittel (16) zur steuerbaren Kühlmittelweiterleitung vom Heizkörper (12) zum Verdampfer (8) und/oder zur wärmeerzeugenden Einheit (10) sowie vom Kühlkörper (14) zur wärmeerzeugenden Einheit (10) und/oder zum Verdampfer (8).

## Claims

1. Air-conditioning unit for a vehicle that is designed for at least one air-conditioning mode for cooling a temperature-regulating medium and a heat-pump mode for heating the heat-regulating medium, with
- a cooling circuit with a heat-producing unit (10) to be cooled and a heating element (12) for heating the temperature-regulating medium,
- a cryogen circuit with
- a compressor (1),
- a first cryogen/coolant heat exchanger (3) functioning on the cryogen side as a condenser/gas cooler, whereby a heating element (12) for heating the temperature-regulating medium (13) succeeds the coolant-side of the condenser/gas cooler, and
- a second cryogen/coolant heat exchanger (8) functioning, on the coolant side, as a vaporizer (8), whereby the vaporizer has, on the coolant side, a succeeding cooling body (14) for cooling the temperature-regulating medium (13),
**characterized in that**,
- the first cryogen/coolant heat exchanger (3) and the second cryogen/coolant heat exchanger (8) are, in heat-pump mode, on the coolant side, disposed in a common coolant circuit, and
- the first cryogen/coolant heat exchanger (3) and the second cryogen/coolant heat exchanger (8) are, in the air-conditioning mode or in a reheat mode, disposed, on the coolant side, in two separate coolant circuits.

2. Air-conditioning unit in accordance with claim 1, **characterized by**
- a further condenser/gas cooler designed as a cryogen cooler (2) and
- cryogen-flow control-means (17) for controllable supply of cryogen to one and/or in parallel to the other condenser/gas cooler.

3. Air-conditioning unit in accordance with claim 1 or claim 2, **characterized by** coolant-flow control means (16) for controllable further conduction of coolant from the heating element (12) to the vaporizer (8) and/or to the heat-producing unit (10) and from the cooling body (14) to the heat-producing unit (10) and/or to the vaporizer (8).

## Revendications

1. Conditionneur d'air, en particulier pour un véhicule automobile, au moins prévu pour un mode réfrigération pour refroidir un fluide de climatisation (13) et un mode pompe à chaleur pour chauffer le fluide de climatisation, comprenant
- un circuit de fluide de refroidissement avec une unité à refroidir qui génère de la chaleur (10) et un élément de chauffage (12) pour chauffer le fluide de climatisation
- un circuit de fluide de réfrigération équipé
- d'un compresseur (1)
- d'un premier échangeur de chaleur fluide de réfrigération/fluide de refroidissement (3), qui, côté fluide de réfrigération fonctionne en tant que condensateur/refroidisseur de gaz, un élément de chauffage (12) étant raccordé en aval au condensateur/refroidisseur de gaz, pour échauffer le fluide de climatisation (13), et
- un deuxième échangeur de chaleur fluide de réfrigération/fluide de refroidissement (8), côté fluide de réfrigération, fonctionnant en tant qu'évaporateur (8), un élément de refroidissement (14) étant raccordé en aval à l'évaporateur côté fluide de refroidissement, pour refroidir le fluide de climatisation (13),
**caractérisé en ce que**
- le premier échangeur de chaleur fluide de réfrigération/fluide de refroidissement (3) et le deuxième échangeur de chaleur fluide de réfrigération/fluide de refroidissement (8) sont disposés dans un circuit de fluide de refroidissement commun côté fluide de refroidissement en mode pompe à chaleur et
- le premier échangeur de chaleur fluide de réfrigération/fluide de refroidissement (3) et le deuxième échangeur de chaleur fluide de réfrigération/fluide de refroidissement (8) sont disposés dans deux circuits séparés de fluide de refroidissement côté fluide de refroidissement en mode climatisation ou en mode réchauffage.

2. Conditionneur d'air selon la revendication 1, **caractérisé par**
un autre condensateur/refroidisseur de gaz constitué en tant que refroidisseur de fluide de réfrigération (2) et
- un moyen de commande d'écoulement de fluide de réfrigération (17) pour un approvisionnement commandable de fluide de réfrigération vers le premier et/ou parallèlement vers l'autre condensateur/refroidisseur de gaz.

3. Conditionneur d'air selon la revendication 1 ou 2, **caractérisé par** un moyen de commande d'écoulement de fluide de refroidissement (16) pour la transmission commandable de fluide de refroidissement de l'élément de chauffage (12) à l'évaporateur (8) et/ou à l'unité générant la chaleur (10) ainsi que de l'élément de refroidissement (14) à l'unité générant la chaleur (10) et/ou à l'évaporateur (8).
